# EUROPEAN PATENT SPECIFICATION

(11) **EP 3 810 444 B1**
(45) Date of publication and mention of the grant of the patent: **06.05.2026**
(21) Application number: 19800888.0
(22) Date of filing: 08.05.2019
(51) Int. Cl.: B60H 1/00, B60S 1/02, H05B 3/84, H01Q 1/12

(54) **AUTOMOBILE GLAZING DEFOGGER**
ANTIBESCHLAGSEINRICHTUNG FÜR KRAFTFAHRZEUGVERGLASUNG
DÉSEMBUEUR DE VITRAGE AUTOMOBILE

(30) Priority: 09.05.2018 IN 201841017464
(43) Date of publication of application: 28.04.2021
(73) Proprietor: Saint-Gobain Sekurit France, 60150 Thourotte (FR)
(72) Inventor: DHANABAL, Monisha, Chennai 600091 (IN); JAYARAM, Robin C, Thiruvananthapuram 695146 (IN); THANGAMANI, Arunvel, Chennai 600048 (IN)
(74) Representative: Saint-Gobain Recherche
(86) International application number: PCT/IN2019/050366
(87) International publication number: WO 2019/215757

(56) References cited:
- EP-A1- 2 584 864
- EP-A1- 3 312 937
- WO-A1-2005/117494
- DE-B1- 2 507 037
- US-A- 5 877 727
- US-B2- 9 301 343

## Description

### Technical Field

The present disclosure relates generally to an automobile glazing provided with a defogger and in particularly, to an automobile glazing with a quick and efficient defogging using a concentrated defogger coils

### Background

Background description includes information that may be useful in understanding the present disclosure. It is not an admission that any of the information provided herein is prior art or relevant to the presently claimed disclosure, or that any publication specifically or implicitly referenced is prior art.

A defogger or a defroster is a system to clear condensation and frost from the automobile glazing such as windshield, back glass or side windows and provide best possible visibility around the motor vehicles for facilitating both the driver and the occupants. Defogger is a series of resistive conductors connected in parallel or series on the glass. When the power is applied, the conductors heat up, thawing ice and evaporating condensation from the glass. These conductors may be composed of a silver-ceramic material printed and baked onto the interior surface of the glass or maybe a series of very fine wires on the glass. A switch is provided on the dashboard which is pressed to switch on the defogger. The power is supplied to the defogger via physical wires that draw power from the battery of the car. The defogger can be either operated manually or automatically.

The defogger conductor lines are fairly sensitive to physical damages. Sometimes cleaning the automobile glazing also damages defogger. Such damages can sweep away the metal of the conductor lines and interrupts the circuit, which, in turn, prevents the transmission of electricity to all areas of the glazing and results in the transmission of electricity to only a segment of the defogger. This is how defogging often fail in sections of the windshield, as one part of the defogger gets power and another gets cut off from the main circuit over time due to such physical damages. This leads to inefficient defogging of the automobile glazing.

Conventionally, the simplest way to check the function of defogger is by a switch which lights up when the defogger is switched on showing that the power is been supplied to the defogger coil. The other conventional way is to check the defogger manually by a passenger or a driver using his hands by touch and feel or wait to see until the ice or the fog disappears. However, such conventional ways of checking do not work when the defogger is damaged due to breakage in conductor lines. Sometimes a visual inspection is used to detect obvious breakage in the defogger conductor lines.

Besides the above-mentioned ways, there are systems available, which can inspect the breakage in defogger conductor lines more scientifically. Often, to easily inspect break in the conductor lines of a defogger, a test kit is available. The test kit comprises a test lamp with two wire ends. Once the exact point of breakage is found using such a test kit, a proper repair can be made to the defogger conductor lines.

Indian Patent Application No. IN3185/MUM/2014 discloses a similar testing device for checking the working of defogger. The device comprises an 'L' shaped configuration having a positive terminal, a negative terminal and an indicator bulb. The positive terminal of defogger checking device is connected to the positive terminal near the right side connector of the windshield and the negative terminal of the defogger checking device is connected to any coil on the left side of the windshield. Whenever the bulb glows, this indicates the proper functioning of the defogger coil, whereas whenever the bulb is not glowing, this indicates the defect in the electrical circuit of the defogger coil.

Despite such methods present for testing the continuity of defogger coil, these methods have many drawbacks. Firstly, such methods are time taking and cannot be performed quickly without human interventions. Secondly, the defogger inspection process needs a special working space and time, where and when you can check the working of the defogger. Lastly, the devices used for inspection of defogger comes with additional cost.

EP 2 584 864 A1 discloses a heatable window.

Hence, there is a need for the defogger checking mechanism that can overcome all the above-mentioned drawbacks.

The present disclosure is to provide quick and efficient detection of working of defogger coil with the naked eye. Further, the present disclosure provides the detection of working of defogger coil in minimum time. Some other advantages are that the occupant can easily inspect with self-confidence whether the defogger coil is working.

The present disclosure provides a testing mechanism which is integrated in the defogger coil, thereby eliminating the need for any separate device or workspace for detection. The occupant can detect the working of the defogger coil within a few minutes of switching on the defogger. In this case, it is desirable to first defrost a small area of the automobile glazing so as to provide a visual indication regarding the working of the defogger coil.

### Summary of the Disclosure

One aspect of the present disclosure provides an automobile glazing defogger according to Claim 1.

An object of the present disclosure is to provide an automobile glazing indicating the working of a defogger.

Yet another object of the present disclosure is to simplify the working of defogger, thereby facilitating an effortless identification of working of defogger thereof.

Still another object of the present disclosure is to provide an integrated defogger working detection mechanism in an automobile glazing which is efficient and easy from the point of view of the driver and occupants.

Yet a further object of the present disclosure is to avoid manual checking of the defogger for automobile glazing by hands employing touch and feel method.

A still further object of the present disclosure is to provide a method for checking the working status of a defogger.

Other features and aspects of this disclosure will be apparent from the following description and the accompanying drawings.

### Brief Description of the Drawings

Embodiments are illustrated by way of example and are not limited in the accompanying figures.
FIG. 1 illustrates an automobile glazing with two heating zones including a rapid heating zone in accordance with an embodiment of the present disclosure;
FIG. 2 illustrates an automobile glazing with multiple rapid heating zones, according to an embodiment of the present disclosure;
FIG. 3 illustrates an automobile glazing with rapid heating zone provided in busbar, according to an embodiment of the present disclosure;
FIG. 4 illustrates an automobile glazing with rapid heating zone provided in busbar behind ceramic masking region, according to an embodiment of the present disclosure;
FIG. 5 illustrates an automobile glazing with rapid heating zone provided near wiper blade, according to an embodiment of the present disclosure;
FIG. 6 illustrates an automobile glazing with rapid heating zone provided near camera, according to an embodiment of the present disclosure;
FIG. 7 illustrates an infrared image of an automobile glazing with two heating zones, according to an embodiment of the present disclosure;
FIG. 8 illustrates a time-temperature graph of the two heating zones of an automobile glazing, according to an embodiment of the present disclosure;
FIG. 9 illustrates a flow chart of the method of indicating the working of a defogger of an automobile glazing, according to an embodiment of the present disclosure;
FIG. 10 illustrates a flow chart for identifying the type of failure in defogger of an automobile glazing, according to an embodiment of the present disclosure;
FIG. 11 illustrates a block diagram of an automobile glazing defogger system, according to an embodiment of the present disclosure;

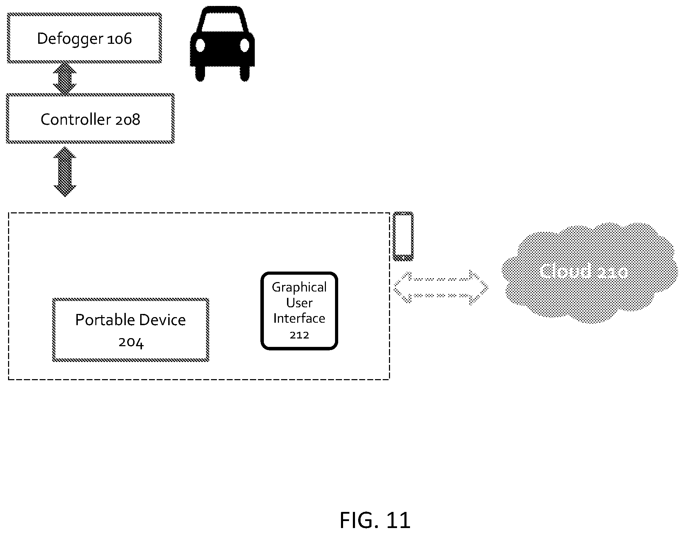

FIG. 11 illustrates a flowchart illustrating the sequence of operation performed by the automobile glazing defogger system, according to an embodiment of the present disclosure;

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the disclosure.

### Detailed Description

The present disclosure is now discussed in more detail referring to the drawings that accompany the present application. In the accompanying drawings, like and/or corresponding elements are referred to by like reference numbers.

Wherever possible, the same reference numbers will be used throughout the drawings to refer to the same or the like parts.

### Definitions

For convenience, the meaning of certain terms and phrases used in the current disclosure are provided below. If there is an apparent discrepancy between the usage of a term in other parts of this specification and its definition provided in this section, the definition in this section shall prevail.

Defogger - Defogger is a system to clear condensation and thaw frost from the windshield, back glass, or side windows of a motor vehicle. The defogger consists of a bus bar, a defogger coil and a power supply. The defogger is used for defogging as well as for defrosting or de-icing. In this disclosure, defogger is used interchangeably with automobile glazing defogger.

Defogging - Defogging means a process of removing fog or moisture from the automobile glazing.

Defrosting - Defrosting means a process of melting of accumulated ice on the automobile glazing.

Defogger coil - Defogger coil is a series of parallel linear resistive conductors on the automobile glazing.

Primary defogger coil - Defogger coil with higher resistance and specific power is defined as a primary defogger coil. The primary defogger coil defines the heating zone Z1.

Secondary heating zone - Defogger coil with low resistance and specific power is defined as secondary defogger coil. The secondary defogger coil defines the heating zone Z2.

Electrical resistance - Electrical resistance is a measure of the difficulty to pass an electric current through a conductor. The electrical resistance can be increased by increasing the concentration of the conductor. The concentration of the conductor is increased by increasing the length or the thickness of the conductor.

Busbar - The busbar is a wider conductor present on the periphery of the automobile glazing and is adapted to carry current to the defogger coil.

The present disclosure provides an automobile glazing defogger comprising of one or more primary defogger coil in a predetermined pattern, design or other representation and a secondary defogger coil covering the rest of the automobile glazing. The primary defogger coil is heated faster to a specified temperature to provide faster defogging than the secondary defogger coil and to indicate the working of the defogger.

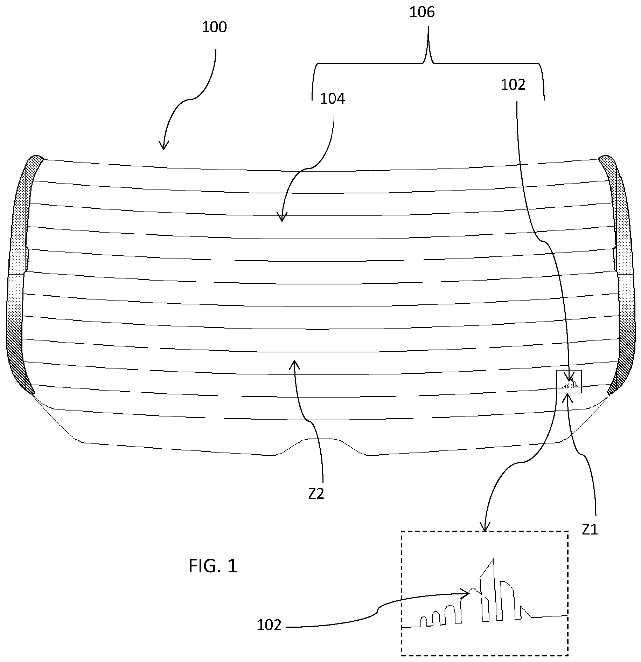

FIG. 1 illustrates an automobile glazing 100 provided with a primary and secondary defogger coils 102, 104 with two different electrical resistances respectively. The primary defogger coil 102 and the secondary defogger coil 104 together make the automobile glazing defogger 106 of the present disclosure. The primary defogger coil 102 is provided in a predetermined pattern, design of other representation. The primary defogger coil 102 can be in the shape of any branded logos or any other preferred designs. The primary defogger coil 102 provided in a predetermined pattern, design of other representation further defines the heating zone Z1. The zone Z1 is generally located at one end of the automobile glazing 100. The zone Z1 may be located on busbar or at one corner of the automobile glazing. The secondary defogger coil 104 defines a heating zone Z2 covering the rest of the automobile glazing 100. The zone Z1 heats faster to a specified temperature than zone Z2, thereby defogging zone Z1 much faster than zone Z2. The zone Z1 defrost quickly displaying the design or pattern formed by primary defogger coil 102 by defogging the zone Z1 rapidly and thereby indicating the occupant to confirm that the defogger 106 is functioning.

According to the invention, the electrical resistance of the primary defogger coil 102 is greater than the electrical resistance of the secondary defogger coil 104. The defogging time is reduced by increasing the electrical resistance of the coil. The electrical resistance is increased by increasing the concentration of the coil in a specific area of the automobile glazing 100. In order to increase the concentration of coil, the length and thickness of the coil should be increased and the distance between the loops formed by the coil should be less. The length and thickness of the primary defogger coil 102per unit area are greater than the secondary defogger coil 104. In the conventional automobile glazing the whole defogger will have the same electrical resistance. In the present disclosure, the defogger 106has two different electrical resistances. The primary defogger coil 102 with greater electrical resistance defines zone Z1 and secondary defogger coil 104 with lesser electrical resistance defines zone Z2. The electrical resistance of the primary defogger coil 102 is increased by increasing the thickness and length of the coil. Conventionally the whole automobile glazing with defogger in use today is normally provided with a 12 volt-20 ampere electrical system. Similarly, in the present disclosure the zone Z1 would be supplied with a current of 20 amperes for the primary defogger coil 102 that has more length and width per unit area and zone Z2 would be supplied with a current of 20 amperes for the primary defogger coil 102 that has a lesser length and width per unit area. In conclusion, due to increase in electrical resistance of primary defogger coil 102 as compared to secondary defogger coil 104, the primary defogger coil 102 is heated faster as compared to secondary defogger coil 104 and hence the defrosting occurs sooner in zone Z1 as compared to zone Z2 and thereby clears visibility in the zone Z1. Further, the specific power and heat density will also be at least 2 times greater in zone Z1 as compared to zone Z2. The specific power sometimes called surface power density is defined as power supplied per unit area. The specific power of primary defogger coil 102 in zone Z1 is greater than the specific power of secondary defogger coil 104 in zone Z2. The primary defogger coil 102 secondary defogger coil 104. The automobile glazing 100 with two heating zones Z1 and Z2 is heated by the same heating power that is power input to both the zones Z1 and Z2 is same, therefore one does not have to make any changes in the power supply for defrosting zone Z1 faster than zone Z2.

In an embodiment, the zone Z1 encompasses an area smaller in size than zone Z2 of the automobile glazing 100. The zone Z2 covers approximately more than half of the total area of the automobile glazing 100.

In an embodiment, the primary and secondary defogger coils 102, 104 are typically applied on the surface of the automobile glazing 100 of a vehicle. Furthermore, the defogger coils 102, 104 are incorporated between the laminated glazing and more specifically, the defogger coils 102, 104 are provided on the interlayer or in the inner face of the glass of the laminated automobile glazing.

In an embodiment, the defogger 106 can be a printed or physical coil or coated conductive layer. In an embodiment, generally silver is used to prepare the defogger coils 102, 104 using screen printing technique. Other materials used for printing defogger 106may include metal, conductive polymers, metal grids, carbon nanotubes (CNT) layer, graphene, transparent conductive oxides, conductive oxides or any conductive material. In an alternate embodiment, the defogger 106 can be made of visible or invisible material. The screen printing is a printing technique whereby a mesh is used to transfer ink onto a substrate, except in areas made impermeable to the ink by a blocking the opening in the mesh with an emulsion. A blade or squeegee is moved across the screen to fill the open mesh apertures with ink, and a reverse stroke then causes the screen to touch the substrate momentarily along a line of contact. This causes the ink to wet the substrate and be pulled out of the mesh apertures as the screen springs back after the blade has passed. The amount of silver that is to be deposited, which decides the width and thickness of the defogger 106 is controlled by varying the mesh size, width of the line and the emulsion coating thickness. The width and the thickness of the defogger 106 are designed to achieve the required defrosting performance. The defogger coils are connected to a busbar on either side. The busbars are wider conductors present on the periphery of the automobile glazing 100 and are adapted to carry current to the defogger 106. These busbars are also made of printed silver. The power supply to the defogger 106 is provided through connectors soldered to the busbar.

In an alternative embodiment, a temperature sensitive material or current sensitive material is placed on the surface of the automobile glazing 100 to provide a visual indication that each individual wire is functioning when the power is applied to the defogger 106. The temperature indicator material or current indicator material are materials that can change the color when the temperature or current is changed. The material has reversible colour characteristics. The temperature indicator material or current indicator material has visible colour characteristics which depend directly on its temperature.

In an embodiment, the automobile glazing 100 along with primary and secondary defogger coil 102, 104 may also comprise of an antenna for reception of frequency modulated radio signals

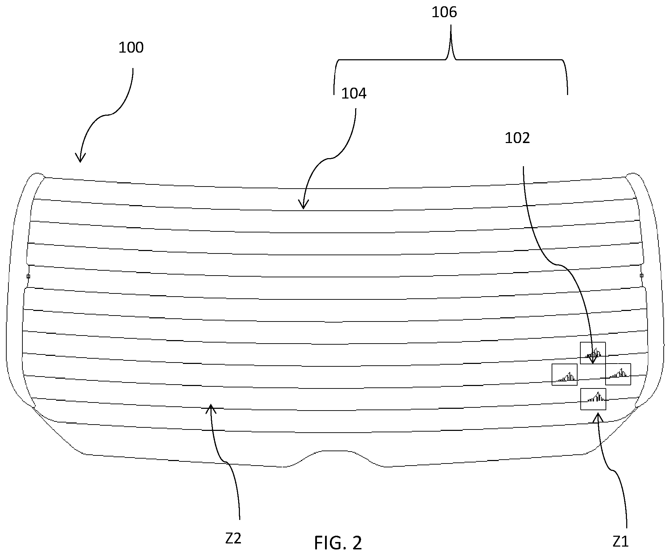

FIG. 2 illustrates multiple rapid heating zones Z1 on each grid of the defogger 106of the automobile glazing 100. The zone Z1 on each grid line defrost quickly displaying the design or pattern formed by primary defogger coil 102 and thereby indicating the occupant or driver to confirm that all the heating grid lines in the defogger 106 is functioning.

In an embodiment, the temperature of zone Z1 is maintained at a maximum temperature of 70⁰C. The steady state temperature of 70⁰C is maintained by adjusting the width and length of the defogger 106.

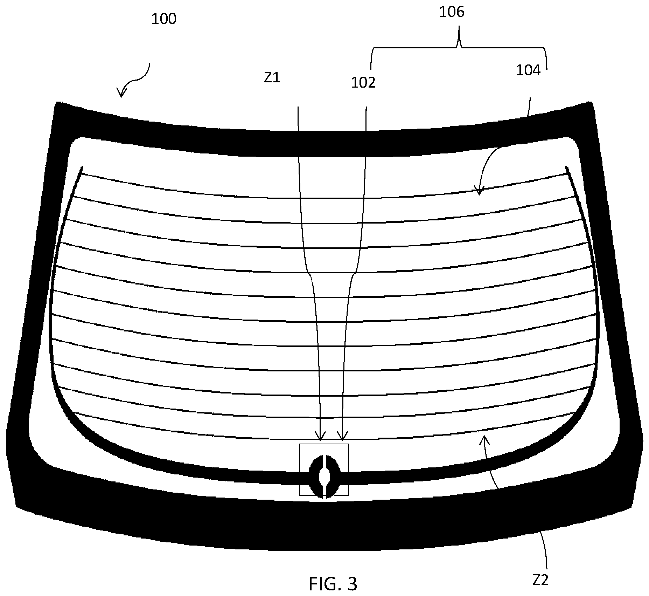

FIG. 3 illustrates a rapid heating zone Z1 provided on the busbar of the automobile glazing 100. Sometimes it is a difficulty to provide rapid heating zone Z1 with optimized temperature on the primary defogger coil 102 due to bents on the automobile glazing 100.

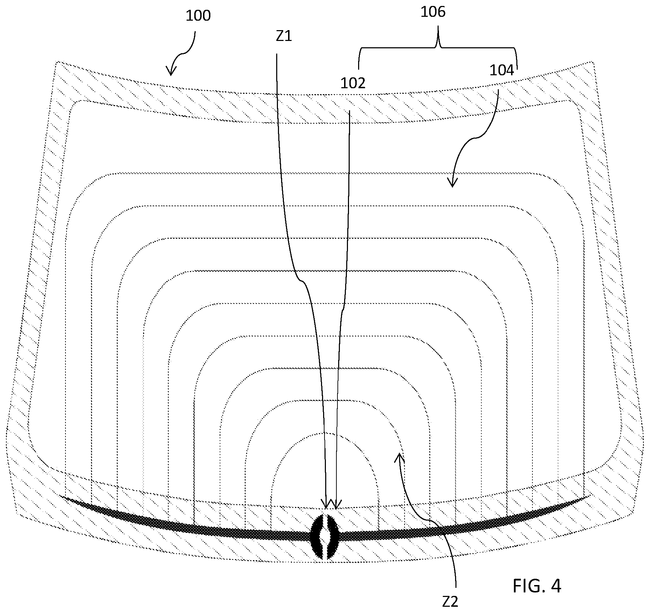

In an alternative embodiment, the heating zone Z1 can be also provided in the ceramic masking region of the automobile glazing 100 as illustrated in FIG. 4 The zone Z1 defined by primary defogger coil 102 is visible or invisible. The invisibility of the primary defogger coil 102 is achieved by using transparent conductive ink, placing it behind ceramic masking region, thin wire plotting.

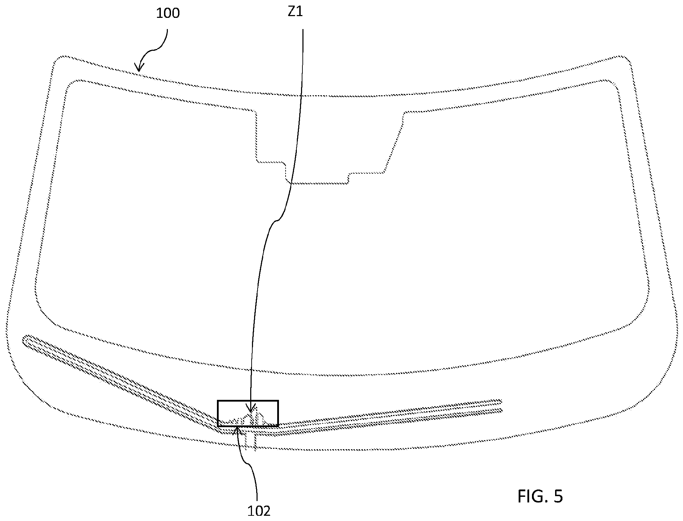

Further, in another alternative embodiment, the rapid heating zone Z1 is provided near the wipers, cameras or sensors on the automobile glazing 100. FIG. 5 illustrates an automobile glazing 100 with rapid heating zone Z1 provided near wiperblade. In freezing weather, the windshield wiper blades can become frozen to the automobile glazing 100. When one attempts to activate the windshield wipers, the torque of the motor applied through a driving linkage for oscillating the wipers may be insufficient to overcome the force with which the wipers are adhered to the automobile glazing 100. By providing primary defogger coil 102 near the wiper blades ensure rapid heating and defrosting of the ice or snow near the wiper blades, which in turn ensures easy and quick movement of wiper blades.

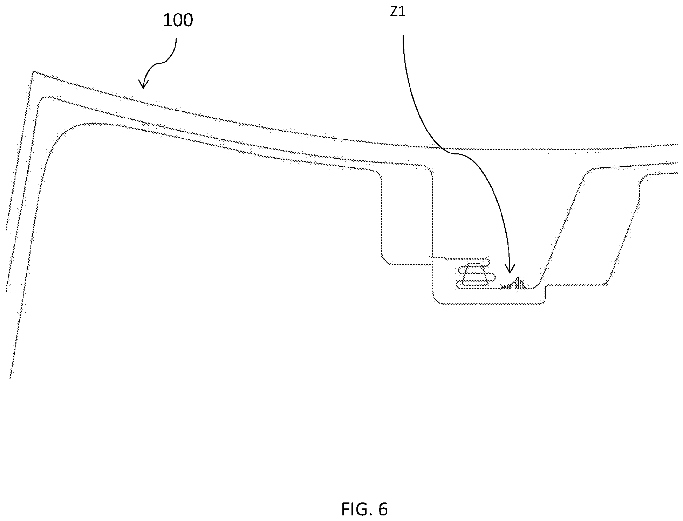

In an alternate embodiment, the heating zone Z1 is provided near the camera or sensor on the automobile glazing 100. FIG. 6 illustrates an automobile glazing 100 with rapid heating zone Z1 provided near the camera. The camera or sensors are provided to help the driver in the driving process. These cameras and sensor are used for automating, adapting and enhancing vehicle for safety and better driving. The rapid heating by the primary defogger coil 102 provided near the camera or sensor ensure quick defogging or defrosting over the camera or the sensor. The rapid defogging or defrosting near the camera or sensors will make it amenable for use quickly.

FIG. 11 describes block diagram of an automobile glazing defogger control system 200 for a user to switch on or off the defogger 106 of the automobile glazing 100. The system 200 prominently includes one or more portable devices 204, an automobile glazing defogger 106 and a controller 208.

In an embodiment, the controller 208 is in communication with the portable devices 204 and the defogger 106. The communication is wireless communication but not limited to Wi-Fi, Wi-Gig LTE, cellular, radio, near field communication or other methods.

In an embodiment, the portable devices 204 may be one of a handheld device, keyless entry remote, computer, mobile, laptop, tab, smartwatch or AR glasses. The portable devices 204 may be a remote device. The portable devices 204 can be controlled by input given by the user in the form of gestures, movements or voice commands. The portable devices 204 have a graphical user interface 212. The graphical user interface 212 is downloaded in the portable devices 204. The user triggers the switching on or off of the defogger 106 from the graphical user interface 212. The graphical user interface 212 uses structured programming languages to execute the selection of switching the defogger 106 on or off given by the user in the form of gestures, movements or voice commands in the graphical user interface 212. The graphical user interface 212 communicates the selection provided by the user to the controller 208 which in turn communicate the input to the defogger 106. The graphical user interface 212 also authenticates the user. The access to graphical user interface 212 is restricted based on only successful authentication of the user. The user authentication information is stored in the cloud 210.

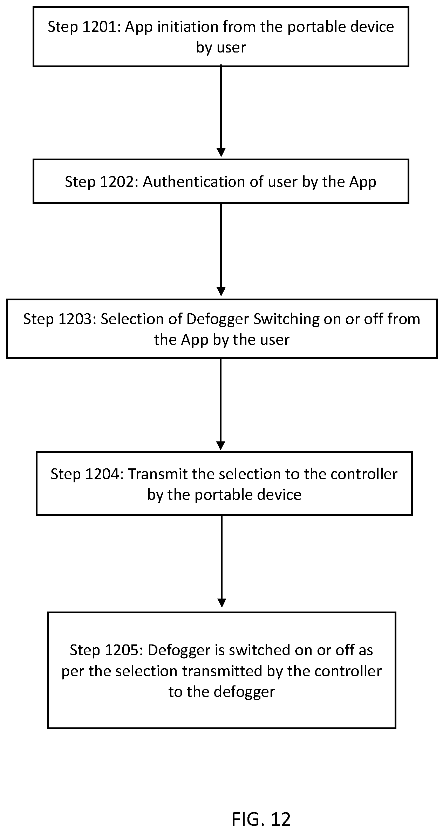

FIG. 12 is a flowchart illustrating the sequence of operations performed by the automobile glazing defogger control system 200. Initially, the user initiates the graphical user graphical user interface 212 from the portable device 204 (step 1201). The graphical user interface 212 authenticates the user (step 1202). The user can select the switching on or off of the defogger 106 by making the selection in the graphical user interface 212 (step 1203). The portal device 204 transmits the selection made by the user to the controller 208 (step 1204). The defogger 106 is switched on or off as per the selection transmitted by the controller 208 to the defogger 106.

### Example

### Example 1

In order that the disclosure may be readily understood a specific embodiment thereof will now be described by way of an example. An experiment was conducted to study the temperature variation of zones Z1 and Z2 (The primary defogger coil 102 which defines zone Z1 and secondary defogger coil 104 which defined zone Z2) of an automobile glazing 100 was provided with the following parameters as shown in Table 1.

**Table 1 illustrates the various parameters of primary defogger coil 102 and 104**

| Parameters | Primary defogger coil 102 | Secondary defogger coil 104 | Units |
|---|---|---|---|
| Length | 78.5 | 27.2 | Mm |
| Width | 0.57 | 0.47 | Mm |
| Thickness | 8.2 | 8.2 | Micron |
| Power | 1.2 | 0.5 | W |
| Specific power | 45.9 | 6.5 | W/dm2 |
| Area | 0. 02 | 0.08 | dm² |
| Resistance | 0.46 | 0.20 | Ohm |
| Current | 1.62 | 1.62 | A |
| Voltage | 0.75 | 0.33 | V |

The automobile glazing was maintained at 23°C and was connected to a 12 V power supply. The image was captured after few minutes to see the actual temperatures in zone Z1 and zone Z2. The defrosting performance of the whole glass was verified using thermal imaging technique. In addition, the temperature of the automobile glazing was captured at different intervals to see the actual temperature in zone Z1 and zone Z2.

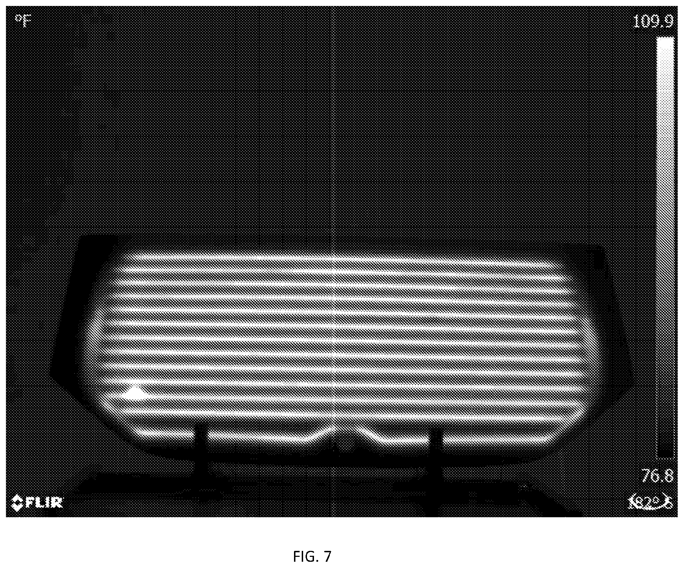

FIG. 7 illustrates the infrared image of the automobile glazing 100 indicating the zone Z1 attaining the specified temperature as compared to zone Z2.

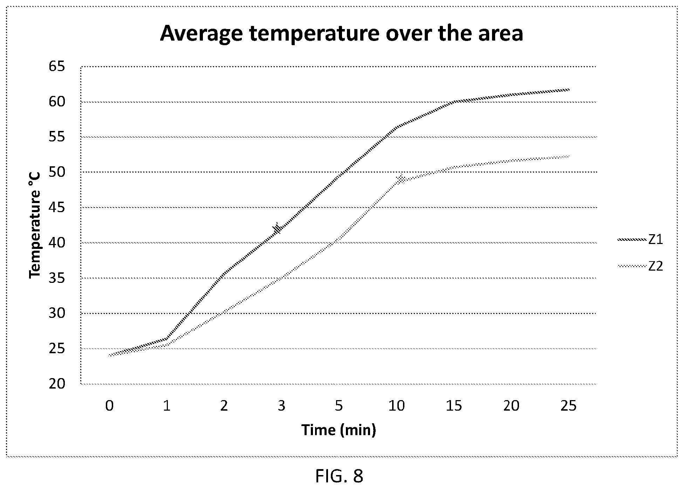

FIG. 8 illustrates the time-temperature graph of the two heating zones Z1 and Z2 of the automobile glazing 100. The complete area around the zone Z1 reached 42°C in 3 minutes whereas the zone Z2 took ~10 minutes to reach an average temperature of 48°C.

### Industrial Applicability

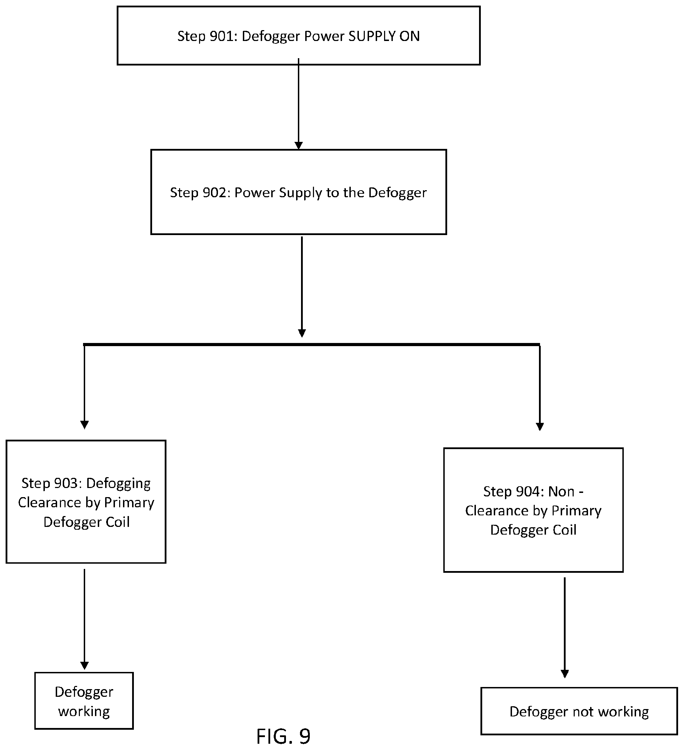

FIG.9 illustrates a flow chart of a method of indicating the working of a defogger 106 in an automobile glazing 100 of a vehicle is disclosed. Firstly, keeping the defogger switch on the power supply by pushing the button provided on the dash board (step 901). The power is supplied will be indicated by light on the dashboard (step 902). The power is supplied to the defogger 106 via physical wires that draw power from the battery of the car. The visual clearance of the rapid heating zone will indicate the working of the defogger 106(step 903) or the individual defogger 106 grid based on the location of the rapid heating zone. The visual non clearance of the rapid heating zone will indicate the non-working of the defogger 106 (step 904).

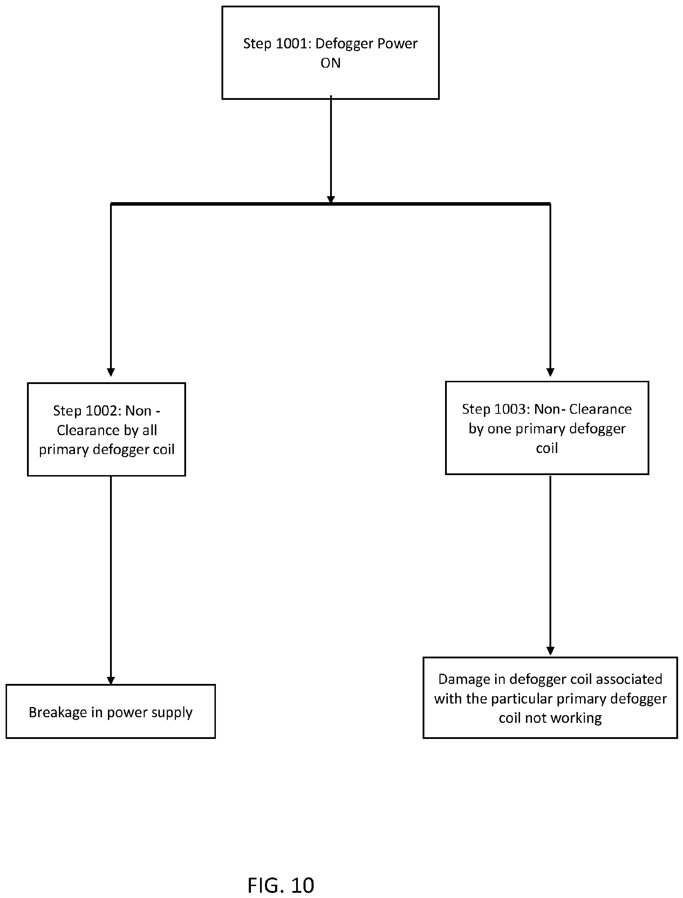

Alternatively, FIG.10 illustrates a flow chart for identifying failure in defogger 106 using the automobile glazing system of the current disclosure. Each portion of the defogger 106further includes a primary defogger coil 102 and a secondary defogger coil 104. The primary defogger coil 102 defined zone Z1 and secondary defogger coil 104 defined zone Z2. The power is supplied to the defogger 106 via physical wires that draw power from the battery of the car (step 1001). The failure in one or more primary defogger coil 102 indicates the damage in defogger 106 associated with the said primary defogger coil 102 (steps 1003). The failure in all the primary defogger coil 102 indicates breakage in the power supply (steps 1002). The breakage in the power supply may be due to battery failure or physical wire breakage.

According to the basic construction described above, the automobile glazing system of the present disclosure may be subject to changes in materials, dimensions, constructive details and/or functional and/or ornamental configuration without departing from the scope of the protection claimed.

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Certain features, that are for clarity, described herein in the context of separate embodiments, may also be provided in combination in a single embodiment. Conversely, various features that are, for brevity, described in the context of a single embodiment, may also be provided separately or in a sub combination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive.

The description in combination with the figures is provided to assist in understanding the teachings disclosed herein, is provided to assist in describing the teachings, and should not be interpreted as a limitation on the scope or applicability of the teachings. However, other teachings can certainly be used in this application.

As used herein, the terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the disclosure. This description should be read to include one or at least one and the singular also includes the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this disclosure belongs. The materials, methods, and examples are illustrative only and not intended to be limiting. To the extent that certain details regarding specific materials and processing acts are not described, such details may include conventional approaches, which may be found in reference books and other sources within the manufacturing arts.

While aspects of the present disclosure have been particularly shown and described with reference to the embodiments above, it will be understood by those skilled in the art that various additional embodiments may be contemplated by the modification of the disclosed machines, systems and methods without departing from the scope of the claims.

### List of Elements

- 100: Automobile glazing
- 102: Primary defogger coil
- 104: Secondary defogger coil
- 106: Automobile glazing defogger/Defogger
- 200: System
- 204: Portable Devices
- 208: Controller
- 210: Cloud
- 212: Graphical User Interface
- 901: Step
- 902: Step
- 903: Step
- 904: Step
- 1001: Step
- 1002: Step
- 1003: Step
- 1201: Step
- 1202: Step
- 1203: Step
- 1204: Step
- 1205: Step
- Z1, Z2: Heating zones

## Claims

1. An automobile glazing defogger (106) comprising:
one or more primary defogger coil (102) in a predetermined pattern, design or other representation; and
a secondary defogger coil (104) covering the rest of the automobile glazing (100);
whereby the primary defogger coil (102) is adapted to heat faster to a specified temperature to provide faster defogging than the secondary defogger coil 104 and to indicate the working of the defogger (106), and
said primary and secondary defogger coils (102, 104) being a series of parallel linear resistive conductors on the automobile glazing, and **characterised in that** the electrical resistance of the primary defogger coil (102) is greater than the resistance of the secondary defogger coil (104).

2. The automobile glazing defogger (106) as claimed in claim 1, wherein the primary defogger coil (102) is provided on the busbar region, wiper blade, camera and ceramic masking region.

3. The automobile glazing defogger (106) as claimed in claim 1, wherein the primary defogger coil (102) is visible or invisible.

4. The automobile glazing defogger (106) as claimed in claim 3, wherein the invisibility of the primary defogger coil (102) is achieved by using transparent conductive ink.

5. The automobile glazing defogger (106) as claimed in claim 3, wherein the primary defogger coil (102) is placed behind ceramic masking region of the automobile glazing.

6. The automobile glazing defogger (106) as claimed in claim 3, wherein the primary defogger coil (102) is made by thin wire plotting.

7. The automobile glazing defogger (106) as claimed in claim 1, wherein the primary and secondary defogger coil (102, 104) is applied on a surface of the automobile glazing.

8. The automobile glazing defogger (106) as claimed in claim 1, wherein the primary and secondary defogger coil (102, 104) may be sandwiched in a laminated automobile glazing.

9. The automobile glazing defogger (106) as claimed in claim 1, wherein the specific power of the primary defogger coil (102) is at least 2 times greater than the specific power of the secondary defogger coil (104).

10. A method to identify failure in the automobile glazing defogger (106) as claimed in claim 1,
comprising:
switching on a power supply of the defogger (106);
visualizing rapid clearance or non- clearance of fog by one or more primary defogger coil (102) on the automobile glazing (100).

11. The method to identify failure in the automobile glazing defogger as claimed in claim 10, wherein observing the rapid clearance of fog by the primary defogger coil (102) indicates the working of the defogger (106).

12. The method to identify failure in the automobile glazing defogger as claimed in claim 10, wherein observing the non-clearance of fog by the primary defogger coil (102) indicates the non-working of the defogger (106).

13. The method to identify failure in the automobile glazing defogger as claimed in claim 10, wherein observing the non-clearance of fog by all the primary defogger coil (102) indicates breakage in the power supply.

14. The method to identify failure in the automobile glazing defogger as claimed in claim 10, wherein observing the non-clearance of fog by one of the primary defogger coil (102) indicates damage in defogger (106) associated with that particular primary defogger coil (102).

15. An automobile glazing defogger control system (200), wherein the system (200) comprising:
one or more portable devices (204);
an automobile glazing defogger (106) as claimed in claim 1; and
a controller (208) in communication with the portable devices (204) and the defogger (106),
wherein the portable devices (204) configured to communicate with the defogger (106) via controller (208) allowing a user to switch on or off the defogger (106).

16. The automobile glazing defogger control system (200) as claimed in claim 15, wherein the portable devices (204) is a handheld device, keyless entry remote, computer, mobile, laptop, tab, smartwatch or AR glasses.

17. The automobile glazing defogger control system (200) as claimed in claim 16, wherein the portable devices (204) can be controlled by gestures, movements or voice commands.

18. The automobile glazing defogger control system (200) as claimed in claim 16, wherein the portable devices (204) have a graphical user interface (212) for the user to trigger switching on or off of the defogger (106).

19. The automobile glazing defogger control system (200) as claimed in claim 16, wherein the graphical user interface (212) provides authentication of the user.

## Patentansprüche

1. Kraftfahrzeugverglasungsentnebler (106), umfassend:
eine oder mehrere primäre Entnebelungsspulen (102) in einem vorbestimmten Muster, Design oder einer anderen Darstellung; und
eine sekundäre Entnebelungsspule (104), die den Rest der Kraftfahrzeugverglasung (100) abdeckt;
wobei die primäre Entnebelungsspule (102) angepasst ist, um schneller auf eine spezifizierte Temperatur aufzuheizen, um ein schnelleres Entnebeln als die sekundäre Entnebelungsspule (104) bereitzustellen und das Funktionieren des Entneblers (106) zu indizieren, und
wobei die primären und sekundären Entnebelungsspulen (102, 104) eine Reihe von parallelen linearen Widerstandsleitern auf der Kraftfahrzeugverglasung sind, und **dadurch gekennzeichnet, dass** der elektrische Widerstand der primären Entnebelungsspule (102) größer als der Widerstand der sekundären Entnebelungsspule (104) ist.

2. Kraftfahrzeugverglasungsentnebler (106) nach Anspruch 1, wobei die primäre Entnebelungsspule (102) auf dem Sammelschienenbereich, dem Wischerblatt, der Kamera und dem keramischen Maskierungsbereich bereitgestellt ist.

3. Kraftfahrzeugverglasungsentnebler (106) nach Anspruch 1, wobei die primäre Entnebelungsspule (102) sichtbar oder unsichtbar ist.

4. Kraftfahrzeugverglasungsentnebler (106) nach Anspruch 3, wobei die Unsichtbarkeit der primären Entnebelungsspule (102) durch Verwenden transparenter leitfähiger Tinte erreicht wird.

5. Kraftfahrzeugverglasungsentnebler (106) nach Anspruch 3, wobei die primäre Entnebelungsspule (102) hinter dem keramischen Maskierungsbereich der Kraftfahrzeugverglasung platziert ist.

6. Kraftfahrzeugverglasungsentnebler (106) nach Anspruch 3, wobei die primäre Entnebelungsspule (102) durch Verlegen von dünnem Draht hergestellt ist.

7. Kraftfahrzeugverglasungsentnebler (106) nach Anspruch 1, wobei die primäre und die sekundäre Entnebelungsspule (102, 104) auf einer Oberfläche der Fahrzeugverglasung angebracht ist.

8. Kraftfahrzeugverglasungsentnebler (106) nach Anspruch 1, wobei die primäre und die sekundäre Entnebelungsspule (102, 104) in einer laminierten Kraftfahrzeugverglasung eingelegt sein können.

9. Kraftfahrzeugverglasungsentnebler (106) nach Anspruch 1, wobei die spezifische Leistung der primären Entnebelungsspule (102) mindestens 2-mal größer als die spezifische Leistung der sekundären Entnebelungsspule (104) ist.

10. Verfahren zum Identifizieren von Störungen in dem Kraftfahrzeugverglasungsentnebler (106) nach Anspruch 1,
umfassend:
Einschalten einer Leistungsversorgung des Entneblers (106);
Visualisieren einer schnellen Beseitigung oder Nichtbeseitigung von Nebel durch eine oder mehrere primäre Entnebelungsspulen (102) auf der Kraftfahrzeugverglasung (100).

11. Verfahren zum Identifizieren von Störungen in dem Kraftfahrzeugverglasungsentnebler nach Anspruch 10, wobei ein Beobachten der schnellen Beseitigung von Nebel durch die primäre Entnebelungsspule (102) das Funktionieren des Entneblers (106) indiziert.

12. Verfahren zum Identifizieren von Störungen in dem Kraftfahrzeugverglasungsentnebler nach Anspruch 10, wobei das Beobachten der Nichtbeseitigung von Nebel durch die primäre Entnebelungsspule (102) das Nichtfunktionieren des Entneblers (106) indiziert.

13. Verfahren zum Identifizieren von Störungen in dem Kraftfahrzeugverglasungsentnebler nach Anspruch 10, wobei das Beobachten der Nichtbeseitigung von Nebel durch die gesamten primären Entnebelungsspulen (102) einen Bruch in der Leistungsversorgung indiziert.

14. Verfahren zum Identifizieren von Störungen in dem Kraftfahrzeugverglasungsentnebler nach Anspruch 10, wobei das Beobachten der Nichtbeseitigung von Nebel durch eine der primären Entnebelungsspulen (102) einen Schaden in einem Entnebler (106), der mit dieser festgelegten primären Entnebelungsspule (102) verbunden ist, indiziert.

15. Kraftfahrzeugverglasungsentneblersteuersystem (200), wobei das System (200) umfasst:
eine oder mehrere tragbare Vorrichtungen (204);
einen Kraftfahrzeugverglasungsentnebler (106) nach Anspruch 1; und
eine Steuerung (208) in Kommunikation mit den tragbaren Vorrichtungen (204) und dem Entnebler (106),
wobei die tragbaren Vorrichtungen (204) konfiguriert sind, um mit dem Entnebler (106) über die Steuerung (208) zu kommunizieren, wodurch es einem Benutzer möglich ist, den Entnebler (106) ein- oder auszuschalten.

16. Kraftfahrzeugverglasungsentneblersteuersystem (200) nach Anspruch 15, wobei die tragbaren Vorrichtungen (204) eine Handvorrichtung, eine schlüssellose Zugangsfernbedienung, ein Computer, ein Mobilgerät, ein Laptop, ein Tablet, eine Smartwatch oder eine AR-Brille sind.

17. Kraftfahrzeugverglasungsentneblersteuersystem (200) nach Anspruch 16, wobei die tragbaren Vorrichtungen (204) durch Gesten, Bewegungen oder Sprachbefehle gesteuert werden können.

18. Kraftfahrzeugverglasungsentneblersteuersystem (200) nach Anspruch 16, wobei die tragbaren Vorrichtungen (204) eine grafische Benutzerschnittstelle (212), mit der der Benutzer das Ein- oder Ausschalten des Entneblers (106) auslöst, aufweisen.

19. Kraftfahrzeugverglasungsentneblersteuersystem (200) nach Anspruch 16, wobei die grafische Benutzerschnittstelle (212) eine Authentifizierung des Benutzers bereitstellt.

## Revendications

1. Désembueur de vitrage automobile (106) comprenant :
un filament de désembuage primaire (102) ou plus dans un motif, dessin ou autre représentation, prédéterminé ; et
un filament de désembuage secondaire (104) couvrant le reste du vitrage automobile (100) ;
moyennant quoi le filament de désembuage primaire (102) est conçu pour chauffer plus vite à une température spécifiée pour fournir un désembuage plus rapide que le filament de désembuage secondaire 104 et pour indiquer le fonctionnement du désembueur (106), et
lesdits filaments de désembuage primaire et secondaire (102, 104) étant une série de conducteurs résistifs linéaires parallèles sur le vitrage automobile, et **caractérisé en ce que** la résistance électrique du filament de désembuage primaire (102) est supérieure à la résistance du filament de désembuage secondaire (104).

2. Désembueur de vitrage automobile (106) selon la revendication 1, dans lequel le filament de désembuage primaire (102) est fourni sur la région de barre omnibus, un balai d'essuie-glace, une caméra et une région de masquage en céramique.

3. Désembueur de vitrage automobile (106) selon la revendication 1, dans lequel le filament de désembuage primaire (102) est visible ou invisible.

4. Désembueur de vitrage automobile (106) selon la revendication 3, dans lequel l'invisibilité du filament de désembuage primaire (102) est obtenue en utilisant une encre conductrice transparente.

5. Désembueur de vitrage automobile (106) selon la revendication 3, dans lequel le filament de désembuage primaire (102) est placé derrière la région de masquage en céramique du vitrage automobile.

6. Désembueur de vitrage automobile (106) selon la revendication 3, dans lequel le filament de désembuage primaire (102) est fabriqué par traçage de fil mince.

7. Désembueur de vitrage automobile (106) selon la revendication 1, dans lequel le filament de désembuage primaire et secondaire (102, 104) est appliqué sur une surface du vitrage automobile.

8. Désembueur de vitrage automobile (106) selon la revendication 1, dans lequel le filament de désembuage primaire et secondaire (102, 104) peut être placé en sandwich dans un vitrage automobile feuilleté.

9. Désembueur de vitrage automobile (106) selon la revendication 1, dans lequel la puissance spécifique du filament de désembuage primaire (102) est au moins 2 fois supérieure à la puissance spécifique du filament de désembuage secondaire (104).

10. Procédé pour identifier une défaillance dans le désembueur de vitrage automobile (106) selon la revendication 1,
comprenant :
l'activation d'une alimentation en puissance du désembueur (106) ;
la visualisation d'une disparition rapide ou d'une non-disparition de buée par un filament de désembuage primaire (102) ou plus sur le vitrage automobile (100).

11. Procédé pour identifier une défaillance dans le désembueur de vitrage automobile selon la revendication 10, dans lequel l'observation de la disparition rapide de buée par le filament de désembuage primaire (102) indique le fonctionnement du désembueur (106).

12. Procédé pour identifier une défaillance dans le désembueur de vitrage automobile selon la revendication 10, dans lequel l'observation de la non-disparition de buée par le filament de désembuage primaire (102) indique le non-fonctionnement du désembueur (106).

13. Procédé pour identifier une défaillance dans le désembueur de vitrage automobile selon la revendication 10, dans lequel l'observation de la non-disparition de buée par la totalité du filament de désembuage primaire (102) indique une rupture dans l'alimentation en puissance.

14. Procédé pour identifier une défaillance dans le désembueur de vitrage automobile selon la revendication 10, dans lequel l'observation de la non-disparition de buée par l'un des filaments de désembuage primaire (102) indique un dommage dans le désembueur (106) associé à ce filament de désembuage primaire (102) particulier.

15. Système de commande de désembueur de vitrage automobile (200), dans lequel le système (200) comprend :
un ou plusieurs dispositifs portables (204) ;
un désembueur de vitrage automobile (106) selon la revendication 1 ; et
un organe de commande (208) en communication avec les dispositifs portables (204) et le désembueur (106),
dans lequel les dispositifs portables (204) sont configurés pour communiquer avec le désembueur (106) par l'intermédiaire de l'organe de commande (208) permettant à un utilisateur d'activer ou de désactiver le désembueur (106).

16. Système de commande de désembueur de vitrage automobile (200) selon la revendication 15, dans lequel les dispositifs portables (204) sont un dispositif portatif, une télécommande d'ouverture sans clé, un ordinateur, un mobile, un ordinateur portable, une tablette, une montre connectée ou des lunettes à réalité augmentée.

17. Système de commande de désembueur de vitrage automobile (200) selon la revendication 16, dans lequel les dispositifs portables (204) peuvent être commandés par des gestes, des mouvements ou des instructions vocales.

18. Système de commande de désembueur de vitrage automobile (200) selon la revendication 16, dans lequel les dispositifs portables (204) ont une interface graphique utilisateur (212) permettant à l'utilisateur de déclencher l'activation ou la désactivation du désembueur (106).

19. Système de commande de désembueur de vitrage automobile (200) selon la revendication 16, dans lequel l'interface graphique utilisateur (212) fournit une authentification de l'utilisateur.
